# EUROPÄISCHE PATENTSCHRIFT

(11) **EP 2 203 646 B1**
(45) Veröffentlichungstag und Bekanntmachung des Hinweises auf die Patenterteilung: **21.02.2018**
(21) Anmeldenummer: 08787292.5
(22) Anmeldetag: 18.08.2008
(51) Int. Cl.: F04D 29/28, B23K 33/00

(54) **RADIALVERDICHTERLAUFRAD**
RADIAL COMPRESSOR WHEEL
ROUE À AUBES DE COMPRESSEUR CENTRIFUGE RADIAL

(30) Priorität: 30.08.2007 DE 102007041142
(43) Veröffentlichungstag der Anmeldung: 07.07.2010
(73) Patentinhaber: Siemens Aktiengesellschaft, 80333 München (DE)
(72) Erfinder: BOLENDER, Harald, 47906 Kempen (DE); WAGNER, Norbert, 46244 Bottrop (DE)
(86) Internationale Anmeldenummer: PCT/EP2008/060809
(87) Internationale Veröffentlichungsnummer: WO 2009/027260

(56) Entgegenhaltungen:
- EP-A- 1 312 435
- WO-A-02/090776
- DE-A1- 4 227 901
- DE-U1- 9 017 543
- FR-A- 982 974
- GB-A- 1 171 961
- US-A- 5 707 209

## Beschreibung

Die vorliegende Erfindung betrifft ein Radialverdichterlaufrad, bestehend aus einer Radscheibe mit Schaufeln und einer Deckscheibe.

Derartige Laufräder kommen in den überwiegenden Fällen bei Kompressoren zum Einsatz aber z.B. auch bei Ventilatoren

Bei bekannten zweidimensionalen Radialverdichterlaufrädern werden die Radscheibe und die Schaufeln aus dem Vollen gefräst und anschließend wird auf den Schaufeln eine Deckscheibe befestigt. Dieses Befestigen kann man grundsätzlich mittels Löten, Kanalschweißen oder mittels Schlitzschweißen erfolgen.

Aufgrund der strömungstechnischen Auslegung kann die Schaufeldicke bei diesen bekannten Laufrädern erheblich größer sein als bei früher verwendeten Laufrädern mit Zylinderflächen sowie bei dreidimensionalen Laufrädern.

Diese große Schaufeldicke führt zu Fertigungsproblemen, wenn aus Gründen der Zugänglichkeit kein Kanalschweißen möglich ist und das Schlitzschweißen angewandt werden muss. Die in die Deckscheibe eingefrästen Schlitze, welche exakt der Schaufelkontur gegenüber liegen, werden beim Schlitzschweißen mit Schweißgut aufgefüllt, was bei geringeren Schaufeldicken ein bewehrtes Verfahren ist. Bei den großen Schaufeldicken der bekannten Laufräder muss jedoch ein entsprechend breiter Deckscheibenschlitz mit Schweißgut aufgefüllt werden, sodass es hierbei zu einer sehr großen Wärmeentwicklung kommt. Diese große Wärmeentwicklung führt zu großen Verzügen in der Geometrie und trägt zur Entstehung von Schweißfehlern bei.

Durch dieses grundsätzliche Problem bei einer vollständigen Schaufelanbindung kommt es zu einem Ausschuss in nennenswerten Umfang.

Radialverdichterlaufräder der eingangs genannten Art sind bereits jeweils aus den Dokumenten FR 982 974 A, WO 02/090776 A, EP 1 312435 A, US 5 707 209 A, GB 1 171 96-1 A, DE 90 17543 U1, DE 42 27 901 A1 bekannt.

Aufgabe der vorliegenden Erfindung ist es daher ein Radialverdichterlaufrad der eingangs genannten Art anzugeben, bei welchem eine ausreichende Befestigung der Deckscheibe an den Schaufeln gewährleistet ist, und gleichzeitig kein nennenswerter Ausschuss produziert wird.

Diese Aufgabe wird für das eingangs genannte Radialverdichterlaufrad durch die zusätzlichen im Anspruch 1 aufgeführten Merkmale gelöst.

Die Erfindung besteht darin, dass die Schaufeln und die Deckscheibe nur noch in ihrem äußeren Bereich, nahe dem Außendurchmesser, miteinander verbunden sind. In diesem Bereich ist die Schaufeldicke und die Länge der Anbindung noch so gering, dass beim Schweißen nur eine unschädliche Wärmeentwicklung eintritt und es somit weder zu Verzügen noch zu Schweißfehlern kommt.

Auf der Basis von Festigkeitsuntersuchungen konnte festgestellt werden, dass diese reduzierte Schaufelanbindung festigkeitsmäßig völlig ausreichend ist.

Weitere zweckmäßige Ausgestaltungen der vorliegenden Erfindung ergeben sich aus den Unteransprüchen sowie aus der nachfolgenden Beschreibung eines Ausführungsbeispiels eines erfindungsgemäßen Radialverdichterlaufrades anhand der beigefügten Zeichnung.

In der Zeichnung zeigen:
- Figur 1: eine perspektivische Ansicht der Deckscheibenseite eines Radialverdichterlaufrades,
- Figur 2: zeigt eine perspektivische Ansicht der Radscheibenseite des in Figur 1 gezeigten Radialverdichterlaufrades, und
- Figur 3: eine Draufsicht auf die Deckscheibenseite eines erfindungsgemäßen Radialverdichterlaufrades, auf welcher sich die Schlitze für das Schlitzschweißen befinden.

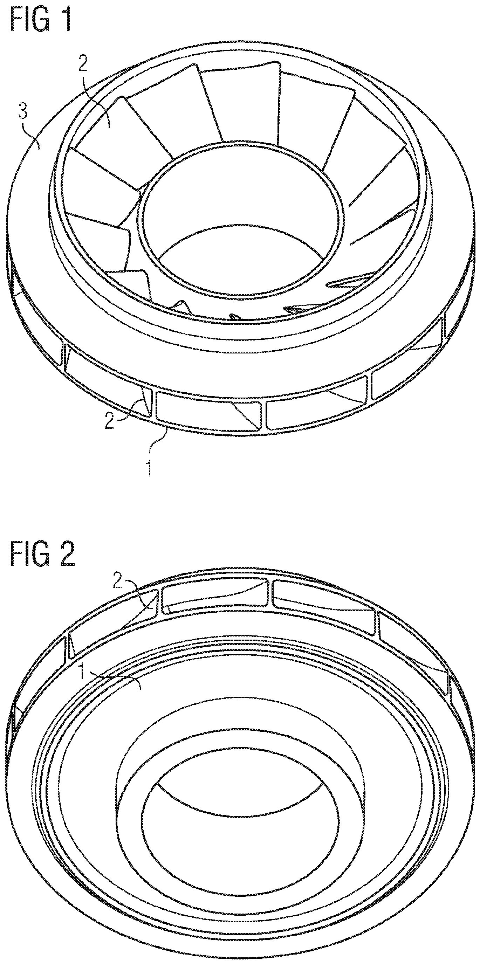

Wie aus den Figuren 1 und 2 zu erkennen ist, besteht das erfindungsgemäße Radialverdichterlaufrad aus einer Radscheiben 1 mit den Schaufeln 2 und einer Deckscheibe 3. Die Radscheibe 1 und die Schaufel 2 bilden eine Einheit, da beide aus einem einzigen Werkstück gefräst sind. Die Deckscheibe 3 wird dann mit den freien Enden der Schaufeln 2 verbunden.

Dieses Verbinden der Deckscheibe 3 mit den Schaufeln 2 erfolgt bei dem dargestellten Ausführungsbeispiel mittels Schlitzschweißen.

Zur Durchführung des Schlitzschweißens sind in die Deckscheibe 3 Schlitze 6 eingefräst, welche exakt der Schaufelkontur gegenüber liegen. Diese Schlitze werden dann mit Schweißgut aufgefüllt.

Bei bekannten Radialverdichterlaufrädern wird der gesamte Schlitz mit Schweißgut aufgefüllt. Dies hat den Nachteil, dass es hierbei zu einer sehr großen Wärmeentwicklung kommt.

Bei den erfindungsgemäßen Radialverdichterlaufrädern sind die Schaufeln 2 und die Deckscheibe 3 nur im äußeren Bereich der Schaufeln 2 miteinander verbunden. Dieser äußere Bereich beträgt vorzugsweise ungefähr ein Drittel der gesamten Schaufellänge.

Daher wird erfindungsgemäß auch nur das äußere Drittel des Schlitzes mit Schweißgut aufgefüllt.

Im äußeren Bereich der Schaufeln 2 ist die Schaufeldicke noch so gering, dass beim Schweißen lediglich eine unschädliche Wärmeentwicklung auftritt und es somit nicht zu großen Verzügen des Werkstücks kommt.

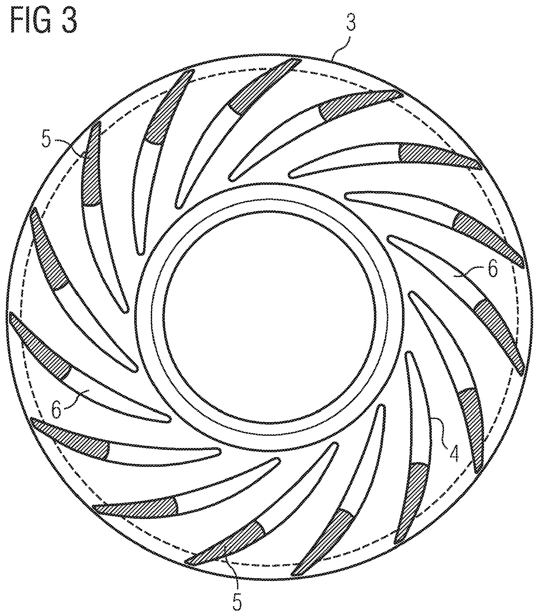

Die mit Schweißgut aufgefüllte Fläche des Schlitzes stellt dann im fertigen Stadium die Verbindungsfläche 5 zwischen Schaufeln 2 und Deckscheibe 3 dar. Der Figur 3 ist zu entnehmen, dass die eigentliche Verbindungsfläche 5 zwischen Schaufeln 2 und Deckscheibe 3 erheblich kleiner ist als die gesamte Berührungsfläche 4 zwischen den Schaufeln 2 und der Deckscheibe 3.

Bei gelöteten Laufrädern tritt das in der Beschreibungseinleitung beschriebene Problem nicht auf, allerdings sind gelötete Laufräder nicht für alle Gasarten geeignet.

Der Grundgedanke, die Schaufeln nur in ihrem äußeren Bereich mit der Deckscheibe zu verbinden, kann aber auch auf gelötete Laufräder übertragen werden. Hierdurch können erhebliche Mengen an Lot eingespart werden, was zu Kostenvorteilen führt.

## Patentansprüche

1. Radialverdichterlaufrad, bestehend aus einer Radscheibe mit Schaufeln und einer Deckscheibe,
**dadurch gekennzeichnet,**
**dass** die Deckscheibe (3) und die Schaufeln (2) nur im äußeren Bereich der Schaufeln (2) auf ungefähr einem Drittel der gesamten Berührungsfläche (4) zwischen den Schaufeln (2) und der Deckscheibe (3) miteinander verbunden sind,
so dass die eigentliche Verbindungsfläche (5) zwischen den Schaufeln (2) und Deckscheibe (3) erheblich kleiner ist als die gesamte Berührungsfläche (4) zwischen den Schaufeln (2) und der Deckscheibe (3).

2. Verfahren zur Herstellung eines Radialverdichterlaufrads nach Anspruch 1,
**dadurch gekennzeichnet,**
**dass** die Verbindung zwischen den Schaufeln (2) und der Deckscheibe (3) mittels Schlitzschweißens erfolgt.

3. Verfahren zur Herstellung eines Radialverdichterlaufrads nach Anspruch 1,
das die Verbindung der Schaufeln (2) und der Deckscheibe (3) mittels Löten erfolgt.

## Claims

1. Centrifugal compressor impeller, consisting of an impeller disc having blades and a shroud disc,
**characterized**
**in that** the shroud disc (3) and the blades (2) are connected to one another only in the outer region of the blades (2) to approximately one-third of the total contact surface (4) between the blades (2) and the shroud disc (3), so that the actual connection surface (5) between the blades (2) and the shroud disc (3) is substantially smaller than the total contact surface (4) between the blades (2) and the shroud disc (3).

2. Method for producing a centrifugal compressor impeller according to Claim 1,
**characterized**
**in that** the connection between the blades (2) and the shroud disc (3) is established by means of slot welding.

3. Method for producing a centrifugal compressor impeller according to Claim 1,
that the connection between the blades (2) and the shroud disc (3) is established by means of soldering.

## Revendications

1. Roue à aubes de compresseur radial constituée d'un disque de roue ayant des aubes et d'un disque de recouvrement,
**caractérisée**
**en ce que** le disque (3) de recouvrement et les aubes (2) ne sont reliés entre eux que dans la partie extérieure des aubes (2) sur environ un tiers de la surface (4) totale de contact entre les aubes (2) et le disque (3) de recouvrement,
de sorte que la surface (5) de liaison proprement dite entre les aubes (2) et le disque (3) de recouvrement est considérablement plus petite que la surface (4) totale de contact entre les aubes (2) et le disque (3) de recouvrement.

2. Procédé de fabrication d'une roue à aubes de compresseur radial suivant la revendication 1,
**caractérisé**
**en ce que** la liaison entre les aubes (2) et le disque (3) de recouvrement s'effectue au moins d'une soudure par fente.

3. Procédé de fabrication d'une roue à aubes de compresseur radial suivant la revendication 1,
dans lequel on effectue la liaison des aubes (2) et du disque (3) de recouvrement au moyen d'une brasure.
